(19) Europäisches Patentamt
European Patent Office
Office européen des brevets

(11) **EP 4 220 498 B1**

(12) **EUROPEAN PATENT SPECIFICATION**

(45) Date of publication and mention
of the grant of the patent:
**03.09.2025  Bulletin 2025/36**

(21) Application number: **20955250.4**

(22) Date of filing: **25.09.2020**

(51) International Patent Classification (IPC):
**G06N 20/00** (2019.01)   **G06N 3/045** (2023.01)
**G06N 3/0495** (2023.01)   G06N 3/0464 (2023.01)

(52) Cooperative Patent Classification (CPC):
**G06N 3/045; G06N 3/0495;** G06N 3/0464

(86) International application number:
**PCT/JP2020/036394**

(87) International publication number:
**WO 2022/064656 (31.03.2022 Gazette 2022/13)**

(54) **PROCESSING SYSTEM, PROCESSING METHOD, AND PROCESSING PROGRAM**

VERARBEITUNGSSYSTEM, VERARBEITUNGSVERFAHREN UND VERARBEITUNGSPROGRAMM

SYSTÈME DE TRAITEMENT, PROCÉDÉ DE TRAITEMENT ET PROGRAMME DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023  Bulletin 2023/31**

(73) Proprietor: **Nippon Telegraph And Telephone Corporation**
**Chiyoda-ku**
**Tokyo 100-8116 (JP)**

(72) Inventors:
• **SHI, Kyoku**
**Musashino-shi, Tokyo 180-8585 (JP)**
• **ENOMOTO, Shohei**
**Musashino-shi, Tokyo 180-8585 (JP)**
• **EDA, Takeharu**
**Musashino-shi, Tokyo 180-8585 (JP)**
• **SAKAMOTO, Akira**
**Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(56) References cited:
WO-A1-2019/220620    JP-A- 2008 309 945
JP-A- 2017 126 158    JP-A- 2018 045 369
JP-A- 2020 065 225

• **SHOHEI ENOMOTO ET AL: "Acceleration of Deep Learning Inference by Model Cascading", IEICE TECHNICAL REPORT, IEICE, JP, vol. 119, no. 481 (PRMU2019-98), 29 February 2020 (2020-02-29), pages 203 - 208, XP009537454, ISSN: 2432-6380**
• **JONG HWAN KO ET AL: "Edge-Host Partitioning of Deep Neural Networks with Feature Space Encoding for Resource-Constrained Internet-of-Things Platforms", ARXIV.ORG, CORNELL UNIVERSITY LIBRARY, 201 OLIN LIBRARY CORNELL UNIVERSITY ITHACA, NY 14853, 12 February 2018 (2018-02-12), XP081220849**
• **OKAYAMA YOSHIAKI: "Overview of Edge with the Cloud in Support of IoT", NIKKEI SYSTEMS, no. 302, 26 May 2018 (2018-05-26), JP , pages 50 - 53, XP009543447, ISSN: 1881-1620**
• **MORITA, KAZUNARI : "Use of Homomorphic Encryption for Secret Person Re-identification", IEICE TECHNICAL REPORT, vol. 117, no. 443, 12 February 2018 (2018-02-12), JP , pages 53 - 58, XP009535719, ISSN: 0913-5685**

EP 4 220 498 B1

**Description**

Technical Field

The present invention relates to a processing system, a processing method, and a processing program.

Background Art

Since a data amount of data collected by an IoT device represented by a sensor is enormous, an enormous communication amount is generated when data collected by cloud computing is aggregated and processed. Therefore, even in an edge device close to a user, attention is focused on edge computing that processes collected data.
However, a computation amount and resources such as a memory of a device used in the edge device are poor as compared with a device other than the edge device physically and logically disposed farther from the user than the edge device (hereinafter described as a cloud for convenience). For this reason, when processing with a large computation load is performed by the edge device, it may take a lot of time to complete the processing, or it may take time to complete another processing with a small computation amount. For example, there is a case where processing waiting occurs for another processing while processing with a large computation amount is performed in the edge device.
Here, one of the processing with the large computation amount is processing related to machine learning. Non Patent Literature 1 proposes application of so-called adaptive learning to an edge/cloud. That is, in a method described in Non Patent Literature 1, a learned model learned by using general-purpose learning data in a cloud is developed in an edge device, and learning is performed again on the model learned by the cloud by using data acquired by the edge device, thereby realizing operation utilizing advantages of the cloud and the edge device.
SHOHEI ENOMOTO ET AL: "Acceleration of Deep Learning Inference by Model Cascading", IEICE TECHNICAL REPORT, IEICE, JP, vol. 119, no. 481 (PRMU2019-98), 29 February 2020 (2020-02-29), pages 203-208, relates to model cascades. A light moth model is placed in an IoT device and a high-precision model in the cloud. Inference processing is offload to the high-precision model only when the light-weight model's measurements are unreliable.
JP 2018 045369 A relates to a recognition device which includes a reception unit for receiving a request for recognition processing to find a class to which input information belongs from a lower-level device. A recognition unit executes recognition processing by using dictionary information and outputting a score indicating similarity to the class to which the input information belongs. A determination unit determines whether to transfer the request to an upper-level device on the basis of the score and a transmission unit transmits the request to the upper-level device if it is determined that the request will be transferred. An update unit updates the dictionary information on the basis of the input information and the found class.

Citation List

Non Patent Literature

Non Patent Literature 1: Okoshi et al., "Proposal and Evaluation of DNN Model Operation Method with Cloud/Edge Collaboration", Proceedings of the 80th National Convention, 2018(1), 3-4, 2018-03-13.

Summary of Invention

Technical Problem

The edge/cloud network described above is expected to be applied to applications such as automatic analysis of surveillance camera images, automatic driving, and smart speakers, for example. In these applications, real-time performance is regarded as important together with accuracy, but communication cost and delay between the edge and the cloud have been problematic.
The present invention has been made in view of the above, and an object thereof is to provide a processing system, a processing method, and a processing program capable of reducing an amount of data transfer from an edge device to a server device and reducing delay.

Solution to Problem

The present invention is defined in the appended independent claims. Further preferred embodiments are defined in the dependent claims.

Advantageous Effects of Invention

According to the present invention, it is possible to reduce an amount of data transfer from the edge device to the server device and reduce delay.

Brief Description of Drawings

Fig. 1 is a diagram for describing an outline of a processing method of a processing system according to an embodiment.
Fig. 2-1 is a diagram for describing an example of DNN1 and DNN2.
Fig. 2-2 is a diagram for describing an example of DNN1 and DNN2.
Fig. 3 is a diagram schematically illustrating an example of a configuration of the processing system according to the embodiment.
Fig. 4 is a diagram for describing a selection example of base models of DNNs.
Fig. 5 is a diagram illustrating an outline of a structure of YOLOv3.
Fig. 6-1 is a diagram for describing an example of a structure of the DNNs.
Fig. 6-2 is a diagram for describing an example of a structure of the DNNs.
Fig. 7 is a sequence diagram illustrating a flow of processing of the processing system according to the embodiment.
Fig. 8 is a diagram illustrating processing time of each DNN selected as an example in the processing system.
Fig. 9 is a distribution diagram of entropy of test data obtained on the basis of inference results of the DNNs.
Fig. 10 is a graph illustrating a relationship between an offload rate and overall accuracy.
Fig. 11 is a diagram illustrating an example of a computer on which an edge device and server device are implemented by executing a program.

Description of Embodiments

Hereinafter, an embodiment of the present invention will be described in detail with reference to the drawings. Note that the present invention is not limited by this embodiment. Further, the same portions are denoted by the same reference signs in the description of the drawings.
[Embodiment] [Outline of Embodiment] An embodiment of the present invention will be described. In the embodiment of the present invention, a processing system that performs inference processing using a learned high-accuracy model and a learned lightweight model will be described. In the processing system of the embodiment, any neural network may be used, and signal processing with a low computation amount and signal processing with a high computation amount may be used instead of the learned models.

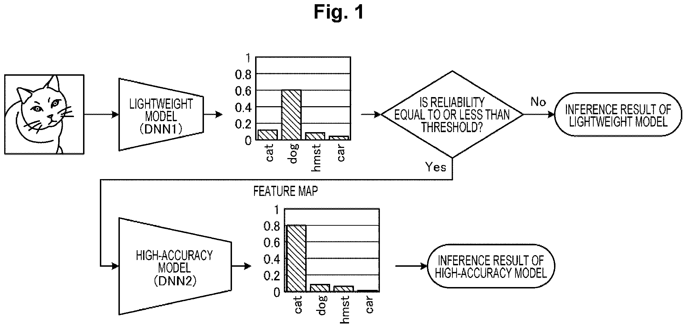

Fig. 1 is a diagram for describing an outline of a processing method of the processing system according to the embodiment. In the processing system of the embodiment, the high- accuracy model and the lightweight model constitute a model cascade. In the processing system of the embodiment, whether the processing is executed in an edge device using a high-speed and low-accuracy lightweight model (for example, DNN1 (first model)) or a cloud (server device) using a low-speed and highly accurate high-accuracy model (for example, DNN2 (second model)) is controlled using reliability. For example, the server device is a device disposed at a place physically and logically far from a user. The edge device is an IoT device and a variety of terminal devices arranged in a place physically and logically close to the user, and has fewer resources than the server device.
The DNN1 and the DNN2 are models that output inference results on the basis of input processing target data. In an example of Fig. 1, the DNN1 uses an image as an input and infers probability for each class of an object appearing in the image on the basis of a feature amount extracted from the image. The DNN2 uses the feature amount (meaning an output of a predetermined intermediate layer, and hereinafter referred to as a feature map) extracted by the DNN1 as an input, and infers probability for each class of the object appearing in the image to be inferred. Note that both the DNN1 and the DNN2 perform inference on the same image. Furthermore, in the processing system, in the edge device, it is determined which inference result of the DNN1 or the DNN2 is adopted on the basis of a comparison result between reliability (described later) and a threshold. The reliability is a value for determining which of the edge device and the server device should process the processing target data. The reliability may be obtained, for example, on the basis of entropy of the inference result by the DNN1. The reliability may be set to a value that decreases as the entropy of the inference result of the DNN1 increases. Specific examples will be described later.
As illustrated in Fig. 1, the processing system acquires the reliability of the inference of the class classification of the DNN1 with respect to the object appearing in the input image. Then, in the processing system, in a case where the acquired reliability exceeds a predetermined threshold, the inference result of the DNN1 is adopted. That is, the inference result of the lightweight model is output as a final estimation result of the model cascade. On the other hand, in the processing system, in a case where the reliability is equal to or less than the predetermined threshold, the inference result obtained by inputting the feature map extracted by the DNN1 to the DNN2 is output as the final inference result.

As described above, the processing system according to the embodiment selects the edge device or the server device on the basis of the comparison result between the reliability and the threshold as to which of the edge device and the server device should process the processing target data, and processes the processing target data. Therefore, the processing system according to the embodiment can control whether the processing is executed in the edge device or the cloud.

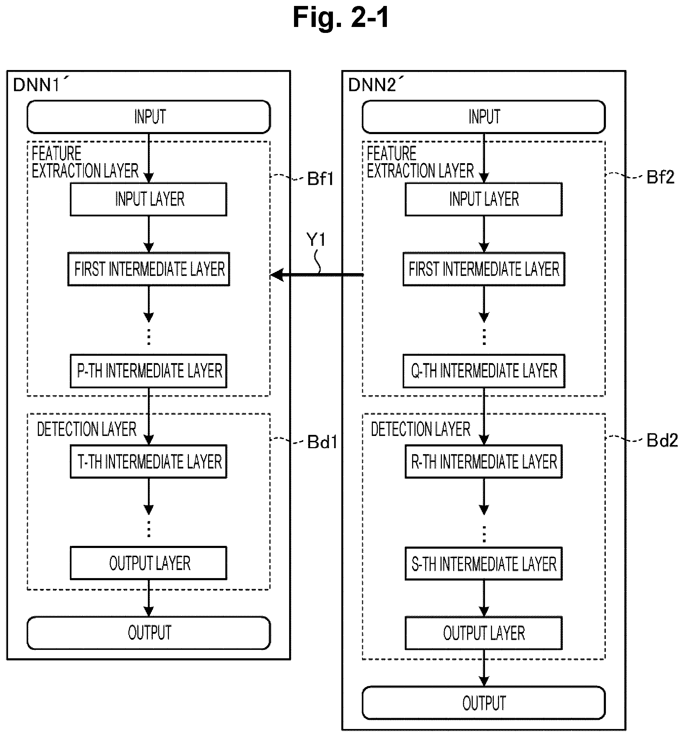

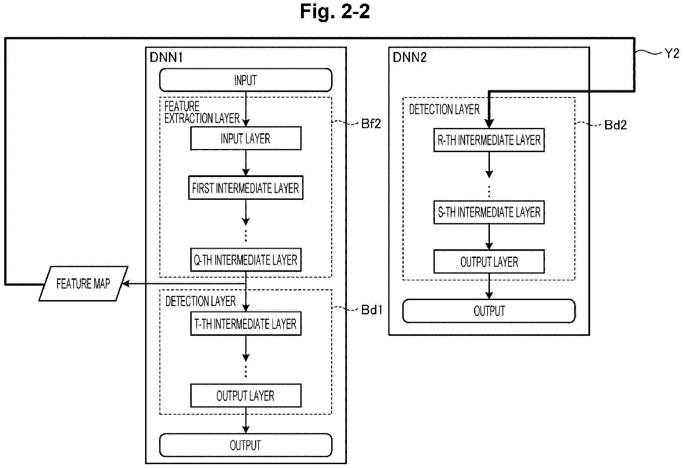

[Lightweight Model and High-Accuracy Model] Next, the DNN1 and the DNN2 will be described. Figs. 2-1 and 2-2 are diagrams for explaining an example of the DNN1 and the DNN2. The DNN includes an input layer into which data is input, a plurality of intermediate layers that variously converts the data input from the input layer, and an output layer that outputs a so-called inferred result such as probability and likelihood. An output value output from each layer may be irreversible when data to be input needs to maintain anonymity.

As described above, the processing system uses the DNN2 on the cloud side and uses the DNN1 on the edge side. As DNN2' before being arranged on the cloud side, a high-accuracy model including a feature extraction layer Bf2 that extracts a feature amount of an input image and outputs the feature amount as a feature map and a detection layer Bd2 (second execution unit) that is a layer that performs processing using the extracted feature amount (for example, a layer that detects an object appearing in the input image or infers probability for each class of the object appearing in the input image (hereinafter collectively referred to as the detection layer Bd2)) is adopted (see Fig. 2-1). In the processing system, learning data is used in advance to train the DNN2' before arrangement.

Then, in the processing system, before being arranged on the edge side, instead of a feature amount extraction layer Bf1 of DNN1' before being arranged on the edge side, the feature extraction layer Bf2 of the trained DNN2' is arranged as it is in a preceding stage of a lightweight detection layer Bd1 on the edge side (see an arrow Y1 in Fig. 2-1), and a DNN obtained by combining the feature extraction layer Bf2 (first extraction unit) and the detection layer Bd1 (first execution unit) is set as the DNN1 on the edge side (see Fig. 2-2). The detection layer Bd1 uses a feature map (feature amount of a certain layer) extracted by the feature extraction layer Bf2 of the DNN1 to infer probability for each class of the object appearing in the input image. Here, a configuration of the DNN1 arranged on the edge side and the DNN2 arranged on the cloud side will be described. In the DNN1 arranged on the edge side, the feature amount extraction layer Bf1 (see Fig. 2-1) is deleted from the original DNN1, and the feature amount extraction layer Bf2 of the trained DNN2' is arranged instead (see Fig. 2-2). That is, the DNN1 including a combination of the feature amount extraction layer Bf2 of the DNN2' and the detection layer Bd1 of the DNN1' is arranged on the edge side. Note that the feature amount extraction layer Bf2 of the DNN1 illustrated in Fig. 2-2 may be fixed and learning may be performed again. Furthermore, the DNN2 arranged on the server side has a configuration in which the feature amount extraction layer Bf2 is deleted from the original DNN2' (see Fig. 2-1) (see Fig. 2-2).

For the DNN1, parameters of the feature extraction layer Bf2 are fixed to parameters after training of the original DNN2', and the detection layer Bd1 in a subsequent stage is trained using learning data. Alternatively, the DNN1 is trained using the learning data for both the feature extraction layer Bf2 and the detection layer Bd1. In addition, the DNN2 and the DNN1 may perform learning independently, or the DNN2 and the DNN1 may perform learning in cooperation with each other. For example, the DNN2 may be retrained using the learning data used by the DNN1. Furthermore, training may be performed using learning data common between the DNN1 and the DNN2.

In the processing system according to the present embodiment, the feature extraction layer Bf2 in the original DNN2' is arranged as the feature extraction layer Bf2 of the DNN1 on the edge side. Therefore, the detection layer Bd2 of the DNN2 on the cloud side can execute inference processing using the feature map output from the feature extraction layer Bf2 of the DNN1 on the edge side (see an arrow Y2 in Fig. 2-2). Therefore, in the processing system according to the present embodiment, it can be said that inference processing can be performed on each of the edge side and the cloud side by sharing the same feature map between the edge and the cloud.

As a result, in a case where inference is performed on the cloud side, execution of feature extraction processing can be omitted. Therefore, calculation time can be shortened, and delay can be reduced. In addition, since the data output from the edge side to the cloud side is not the image to be processed but the feature map extracted from the image, an amount of data transfer from the edge side to the cloud side can be reduced. Note that, since it is only necessary to share the same feature map between the edge and the cloud, a minimum condition to be satisfied by the feature extraction layer Bf2 of the DNN1 actually arranged on the edge side and the feature extraction layer Bf2 of the original DNN2' is that sizes of layers to be connected coincide with each other. This is because relearning is performed again for the detection layer of the DNN1. Note that values of the parameters may be different between the feature extraction layer Bf2 of the DNN1 and the feature extraction layer Bf2 of the DNN2'.

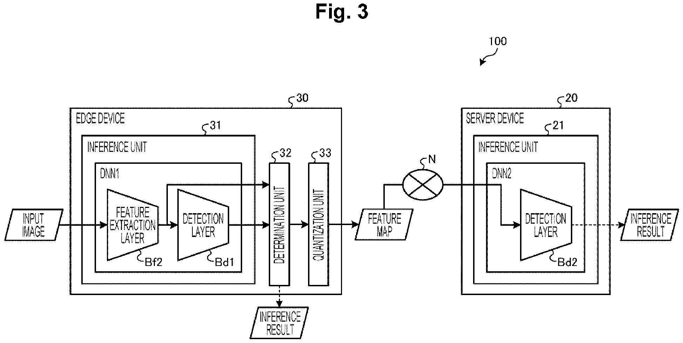

[Processing System] Next, a configuration of the processing system will be described. Fig. 3 is a diagram schematically illustrating an example of the configuration of the processing system according to the embodiment.

A processing system 100 according to the embodiment includes a server device 20 and an edge device 30. In addition, the server device 20 and the edge device 30 are connected via a network N. The network N is, for example, the Internet. For example, the server device 20 is a server provided in a cloud environment. Furthermore, the edge device 30 is, for example, an IoT device and a variety of terminal devices.

Each of the server device 20 and the edge device 30 is implemented by, for example, a predetermined program being read by a computer or the like including a read only memory (ROM), a random access memory (RAM), a central processing unit (CPU), and the like, and the CPU executing the predetermined program. In addition, so-called accelerators represented by a GPU, a vision processing unit (VPU), a field programmable gate array (FPGA), an application specific integrated circuit (ASIC), and a dedicated artificial intelligence (AI) chip are also used. Each of the server device 20 and the edge device 30 includes a network interface card (NIC) or the like, and can perform communication with another device via a telecommunication line such as a local area network (LAN) or the Internet.

As illustrated in Fig. 3, the server device 20 includes an inference unit 21 (second inference unit) that performs inference using DNN2 that is a learned high-accuracy model. The DNN2 includes information such as model parameters. The DNN2 has the detection layer Bd2 as described above.

The inference unit 21 uses the DNN2 to execute inference processing on an input image on the basis of a feature map of the input image output from the edge device 30. The inference unit 21 returns the quantized feature map output from the edge device 30 to FP32 and uses it as an input of the detection layer Bd2 of the DNN2. The inference unit 21 acquires an inference result (for example, probability for each class of an object appearing in the image) as an output of the DNN2. The inference unit 21 receives inference data, that is, an output value of the feature extraction layer Bf2 of the DNN1, and outputs the inference result. It is assumed that the feature map is a feature amount of data whose label is unknown. For example, the inference data is an image. Furthermore, in a case where the inference result is returned to a user, the inference result obtained by the inference unit 21 may be transmitted to the edge device 30 and returned from the edge device 30 to the user.

Here, the server device 20 and the edge device 30 constitute a model cascade. Therefore, the inference unit 21 does not always perform inference. In a case where it is determined to cause the server device 20 to execute the inference processing, the inference unit 21 receives an input of the quantized feature map and performs inference by the detection layer Bd2 of the DNN2.

The edge device 30 includes an inference unit 31 (first inference unit) including the DNN1 that is a learned lightweight model, a determination unit 32, and a quantization unit 33.

The inference unit 31 performs inference using the DNN1 that is the learned lightweight model. The DNN1 includes information such as model parameters. The DNN1 has the feature extraction layer Bf2 of the trained DNN2' (see Fig. 2-1) and the detection layer Bd1 as described above. The inference unit 31 extracts a feature amount of an input image as a feature map using the DNN1, and executes inference processing on the input image on the basis of the extracted feature map.

The inference unit 31 inputs an image to be processed to the DNN1 and acquires an inference result. The inference unit 31 extracts a feature amount of processing target data using the DNN1, and executes inference processing on the processing target data on the basis of the extracted feature amount. The inference unit 31 receives the input of the image to be processed, processes the image to be processed, and outputs an inference result (for example, probability for each class of an object appearing in the image).

The determination unit 32 determines which inference result of the edge device 30 and the server device 20 is adopted by comparing reliability with a predetermined threshold.

In a case where the reliability exceeds the predetermined threshold, the determination unit 32 outputs the inference result inferred by the inference unit 31. In a case where the reliability is equal to or less than the predetermined threshold, the determination unit 32 outputs the feature map, which is an output of the feature extraction layer Bf2 connected to the DNN1 on the edge side, to the server device 20, and determines to cause the DNN2 arranged in the server device 20 to execute the inference processing.

As described above, the reliability may be set to a value that decreases as the entropy of the inference result of the DNN1 increases. The entropy of the inference result of the DNN1 may be obtained by Equation (1). C is a set of all the labels c output from the DNN1, and y is probability of each label. The reliability may be obtained from the entropy obtained in this manner, for example, as reliability = 1/entropy.

[Equation 1]

$$\text{entropy}(y) = \sum_{c \in \mathcal{C}} - y_c \log y_c \quad \cdots (1)$$

In a case where the determination unit 32 determines to cause the server device 20 to execute the inference processing, the quantization unit 33 quantizes the feature map extracted by the feature extraction layer Bf2 of the DNN1 and outputs the quantized feature map to the server device 20.

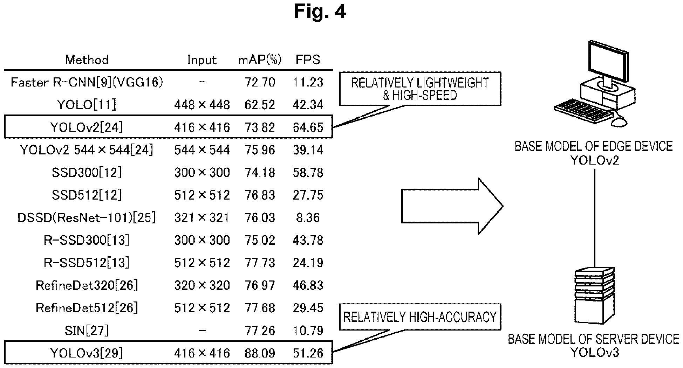

[Model Selection Example of DNN1 and DNN2] Fig. 4 is a diagram for describing a selection example of base models of the DNN1 and the DNN2. In the present embodiment, as a model for inferring probability for each class of an object, as illustrated in Fig. 4, darknet 19 (hereinafter referred to as YOLOv2), which is a relatively lightweight and high-speed back-end model of YOLOv2, is selected as a base model of the edge device 30, and darknet 53 (hereinafter referred to as YOLOv3), which is a relatively high-accuracy back-end model of YOLOv3, is selected as a base model of the server device 20. The selected NNs are an example, and any selection may be made as long as they are an NN with high accuracy and an NN with high speed and lower accuracy than the NN with high accuracy, and NNs capable of sharing a feature amount extraction layer. In a simple example, the edge device 30 and the server device 20 may be configured to have different depths in the same NN.

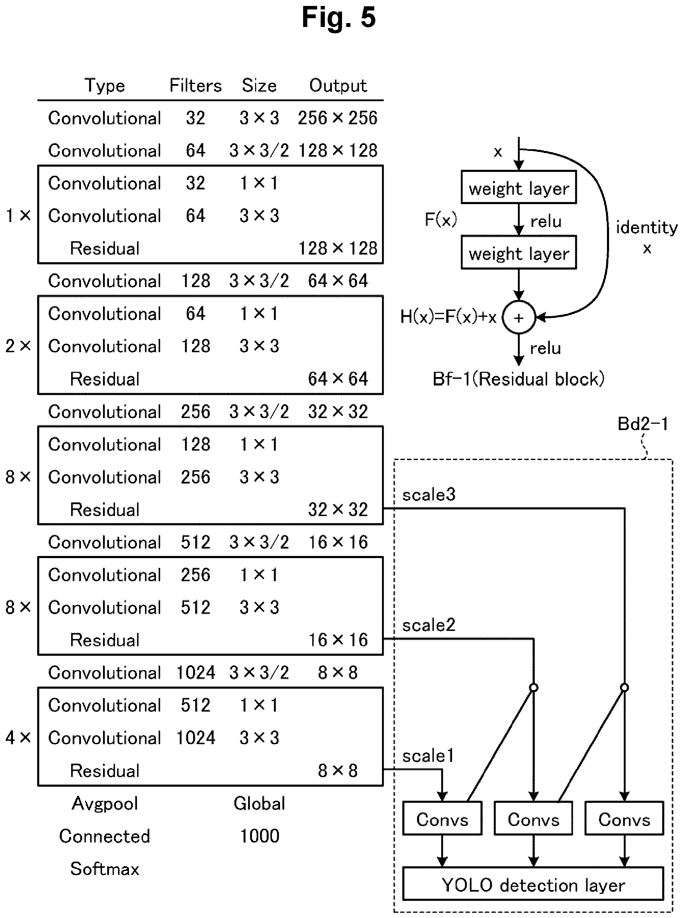

Fig. 5 is a diagram illustrating an outline of a structure of YOLOv3. It is a diagram for explaining a selection example of base models of the DNN1 and the DNN2. The YOLOv3 includes a convolutional layer (feature extraction layer) Bf-1 that performs feature extraction having a Residual block Bf-1 and a detection unit Bd2-1 that is a network for object detection (FPN). Here, in order to share a feature map between the edge and the cloud, attention is paid to the following.

First, by including the Residual block Bf-1, high accuracy is maintained in the YOLOv3. Therefore, it is desirable to avoid impairing a configuration in the Residual block Bf-1. Subsequently, in the YOLOv3, it is desirable to have a configuration in which the feature map is received in a preceding stage of the detection unit Bd2-1 so that the detection unit Bd2-1 can execute detection using the feature map as it is. Note that the deeper the layer is (the more the layer is), the heavier the calculation of the model becomes, and the number of parameters to be used also increases. Therefore, the DNN1 of the edge device 30 is desirably a model having a shallow layer in order to be lightweight and high-speed.

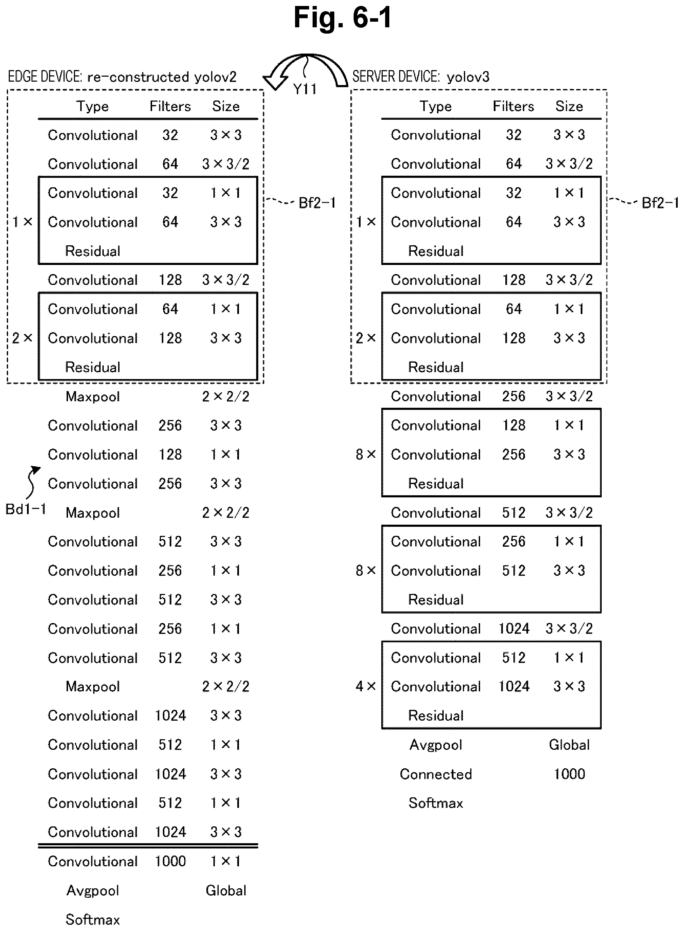

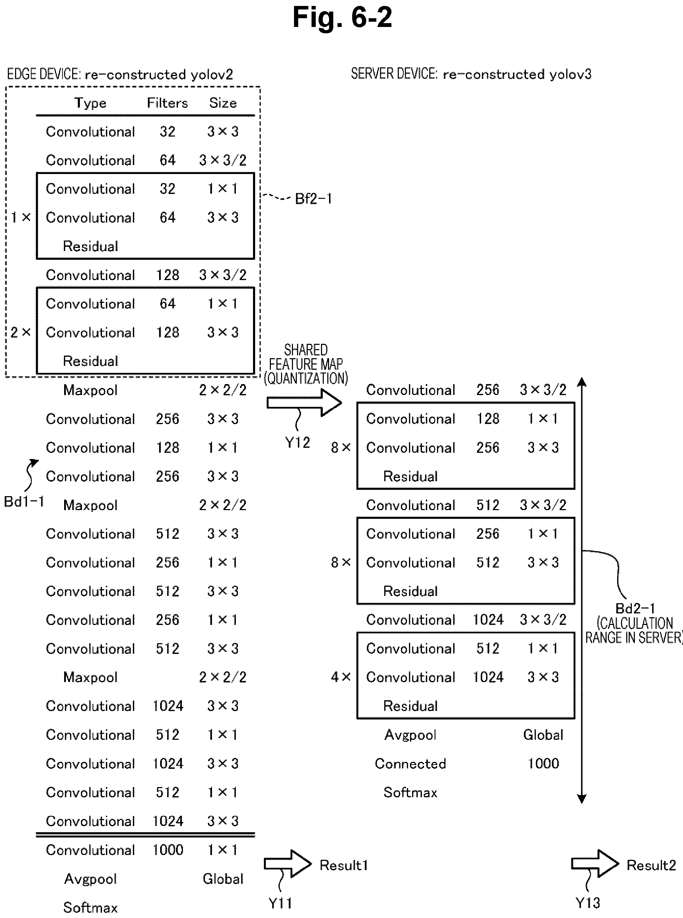

[Example of Structures of DNN1 and DNN2] Figs. 6-1 and 6-2 are diagrams for explaining an example of a structure of DNN1 and DNN2. In order to avoid impairing the configuration in the Residual block Bf-1 of the YOLOv3, a learned feature extraction layer Bf2-1 holding the Residual block Bf-1 is arranged as it is in a preceding stage of YOLOv2 selected as the base model of the edge device 30 (an arrow Y11 in Fig. 6-1), and is set as the DNN1 of the edge device 30. Therefore, in the edge device 30, a feature map is extracted from an image in the feature extraction layer Bf2-1 using the YOLOv2 reconstructed in this way, and probability for each class of an object appearing in the input image is inferred in a detection layer Bd1-1 using the extracted feature map.

Then, in a case where reliability of a result (Result1) of the detection layer Bd1-1 exceeds a predetermined threshold, the edge device 30 determines that the Result1 is reliable, outputs the Result1 (see an arrow Y11 in Fig. 6-2), and ends the processing. Here, as described above, since the feature extraction layer Bf2-1 in the edge device 30 has a common structure with the feature extraction layer Bf2-1 of the YOLOv3 which is the base model of the server device 20, the feature map output from the feature extraction layer Bf2-1 can also be shared with the detection unit Bd2-1 of the server device 20. Note that, in the server device 20, YOLOv3 having a configuration in which the feature extraction layer Bf2-1 is deleted from the YOLOv3 is applied as the DNN2.

Therefore, in a case where the Result1 is equal to or less than the threshold, the edge device 30 determines that the Result1 is not reliable, and outputs a feature map of the feature extraction layer Bf2-1 to the edge device 30 after quantization (see an arrow Y12 in Fig. 6-2). Then, the server device 20 returns this feature map to FP32, inputs the feature map to the detection unit Bd2-1 of the YOLOv3 after the reconstruction, and outputs an inference result (Result2) of the detection unit Bd2-1 (see an arrow Y13 in Fig. 6-2). Therefore, a calculation range in the server device 20 is a calculation range in the detection unit Bd2-1. In other words, in the server device 20, calculation in the feature extraction layer Bf2-1 can be omitted.

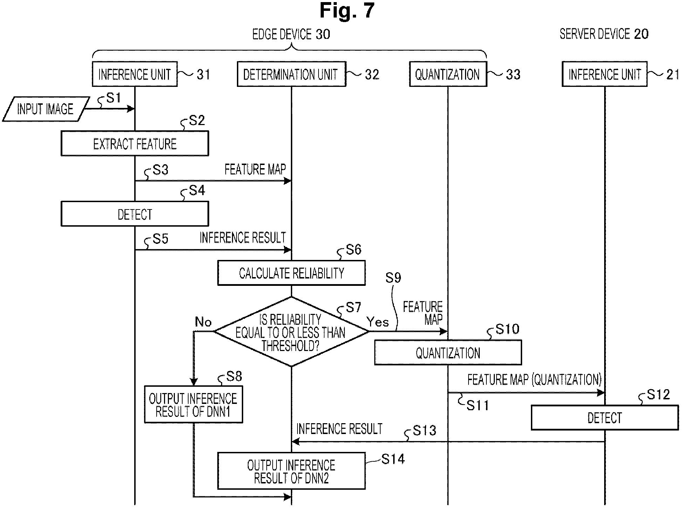

[Processing Procedure of Processing System] Fig. 7 is a sequence diagram illustrating a flow of processing of the processing system according to the embodiment. As illustrated in Fig. 7, first, in the edge device 30, when receiving an input of an image (step S1), the inference unit 31 inputs the input image to the DNN1. In the DNN1, the feature extraction layer Bf2 extracts a feature amount of the input image as a feature map (step S2) and outputs it to the determination unit 32 (step S3). In the DNN1, the detection layer Bd1 executes inference processing, for example, detection processing on the input image on the basis of the feature map (step S4), and outputs an inference result to the determination unit 32 (step S5).

The inference unit 31 calculates reliability on the basis of the inference result (step S6), and the determination unit 32 compares the calculated reliability with a predetermined threshold and determines whether the reliability is equal to or less than the predetermined threshold (step S7).

In a case where the reliability is not equal to or less than the threshold (step S7: No), that is, a case where the reliability exceeds the threshold, the determination unit 32 outputs the inference result inferred by the DNN1 of the inference unit 31 (step S8).

On the other hand, in a case where the reliability is equal to or less than the threshold (step S7: Yes), the determination unit 32 outputs the feature map to the quantization unit 33 (step S9), and the quantization unit 33 quantizes the feature map (step S10) and transmits it to the server device 20 (step S11).

In the server device 20, the inference unit 21 returns the quantized feature map output from the edge device 30 to FP32 and uses it as an input of the detection layer Bd2 of the DNN2. The detection layer Bd2 executes inference processing, for example, detection processing on the input image on the basis of the feature map output from the edge device 30 (step S12). The server device 20 transmits an inference result of the DNN2 to the edge device 30 (step S13), and the inference result is output from the edge device 30 (step S14). Note that, in the present embodiment, a configuration is assumed in which the inference result is returned to a user, and the final inference result is output from the edge device 30. However, in a case where the final inference result is used on the server device 20 side, the inference result of the DNN2 may be output from the server device 20, or may be held in the server device 20 as it is. In a case where the inference result of the DNN1 is used, the edge device 30 may transmit the inference result to the server device 20 in a case where the inference result is used on the server device 20 side.

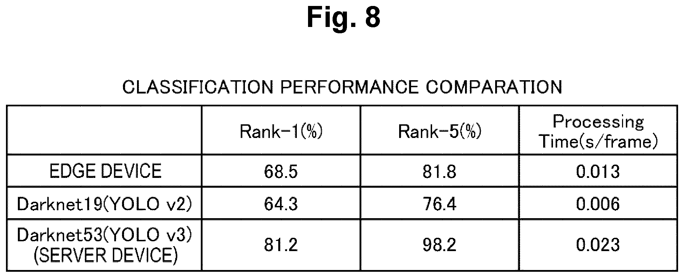

[Evaluation Experiment 1] Processing time of the DNN1 of the edge device 30 and processing time of the DNN2 of the server device were evaluated. A task is classification, test data is ImageNet (300 images for each class, total of 3000 images), and HW is Platform: NVIDIA GeForce RTX 2070 + AMD 3600. Fig. 8 is a diagram illustrating processing time of each DNN selected as an example in the processing system 100.

In Fig. 8, DNN1 of the edge device is a model in which a learned feature extraction layer Bf2-1 holding a Residual block Bf-1 is arranged in a preceding stage of YOLOv2 and training is performed. DNN2 of the server device 20 is learned YOLOv3. For comparison, processing time is also indicated for YOLOv2 which is a base model of the edge device 30.

As illustrated in Fig. 8, the DNN1 of the edge device is deeper than the YOLOv2 by the feature extraction layer Bf2-1, so that the processing time is longer than the YOLOv2, but inference accuracy is improved more than the YOLOv2. Then, the processing time per image of the DNN1 of the edge device is about two times faster than that of the YOLOv3 which is the DNN2 of the server device 20. As described above, even in a case where the feature extraction layer Bf2-1 of the YOLOv3 is arranged instead of the feature extraction layer of the YOLOv2, the DNN1 of the edge device can maintain high speed processing while increasing the inference accuracy.

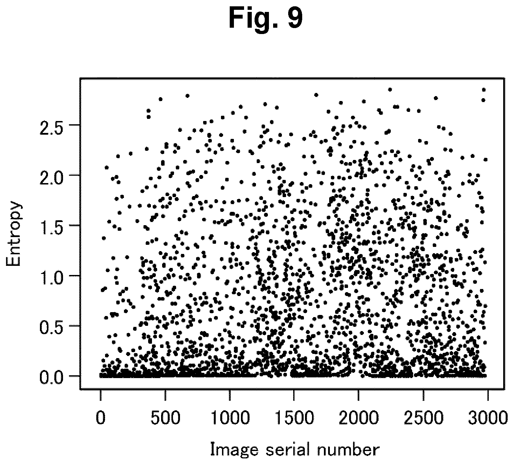

[Evaluation Experiment 2] Distribution of entropy of test data was visualized using the DNN1 of the edge device 30. Conditions of a task, the test data, and HW are the same as those in Fig. 8. Fig. 9 is a distribution diagram of the entropy of the test data obtained on the basis of the inference result of the DNN1.

The higher the entropy, the less reliable the inference result of the DNN1. Therefore, it can be said that it is appropriate to adopt reliability as an evaluation value for determining whether to execute processing in the edge device or the server device in the model cascade. Then, since the entropy of most data is 0.5 or less, it is considered that a threshold of the entropy to be used when it is determined whether to execute processing in the edge device or the server device may be set to 0.5 as a guide.

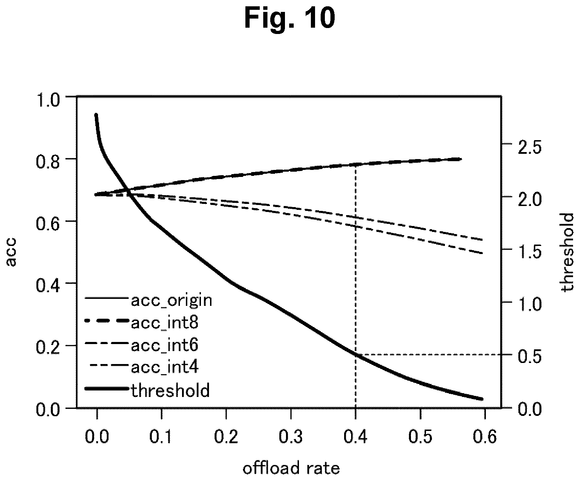

[Evaluation Experiment 3] Therefore, Evaluation Experiment 3 was performed to obtain a variation in overall accuracy of the inference result associated with a variation in the threshold (offload rate) of the entropy. Note that the threshold is linked with the offload rate, and the threshold is increased in a case where the offload rate is decreased. In this evaluation experiment, quantization on the feature map extracted by the feature extraction layer Bf2 of the edge device 30 was performed at int4, int6, and int8. Note that conditions of a task, test data, and HW are the same as those in Fig. 8. Fig. 10 is a diagram illustrating a relationship between an offload rate and overall accuracy. In Fig. 10, "Offload rate 0" is a state in which original accuracy (acc_origin) is low in a case where all the data is processed by the edge device 30 and is not quantized, and "Offload rate 1" is a state in which the original accuracy (acc_origin) is high in a case where all the data is processed by the server device 20 and is not quantized. Int4 quantization, int6 quantization, and int8 quantization are performed on the feature map by the feature extraction layer Bf2 of the edge device 30.

Among them, as illustrated in Fig. 10, among the int4 quantization, the int6 quantization, and the int8 quantization, in a case where the int8 quantization is performed on the feature map by the feature extraction layer Bf2 of the edge device 30, an amount of transfer data can be reduced by 75% as compared with a case where the quantization is not performed without substantially deteriorating the accuracy. Therefore, it is desirable to apply the int8 quantization to the quantization of the feature map.

Note that a cost term may be provided such that the feature map output by the feature extraction layer Bf2 is sparser. As a result, when the int6 and/or the int4 indicate the offload rate and/or the overall accuracy close to the int8 in Fig. 10, a smaller one of the quantization bit rates indicating the offload rate and/or the overall accuracy close to the int8 may be selected from between the int6 and the int4.

In addition, the quantized feature map may be compressed. In a case where compression is to be performed, both the feature map and the quantized feature map are included in a target image, and have properties similar to those of a natural image. Therefore, an image encoding system such as HEVC or VVC may be adopted, or a general-purpose compression system such as ZIP may be adopted. Note that the properties similar to those of the natural image described above mean general properties incorporated in image encoding, such as high correlation between adjacent pixels in many cases. In addition, inverse quantization may be performed when quantization is performed, and decoding may be performed when compression is performed. The quantization and/or the compression may be performed by the edge device, or may be performed by another device physically or logically disposed closer to the edge device (than to the server device). The inverse quantization and/or the decoding may be performed by the server device, or may be performed by another device physically or logically arranged closer to the server device (than to the edge device).

In addition, when the offload rate exceeds 0.4 (entropy threshold is 0.5), improvement in accuracy is small even if the offload rate is increased, that is, even if the entropy threshold is decreased. Therefore, when the threshold is set to 0.5, it is considered that the offload rate and the accuracy are balanced. As described above, by setting the threshold according to the balance between the offload rate and the accuracy, the offload rate and the overall accuracy can be adjusted according to each use case.

Here, a reason for determining the threshold of the entropy will be further described. Lowering of the threshold of the entropy means that an increase in the offload rate. That is, the number of data to be inferred on the server device side may be increased by lowering the threshold of the entropy.

Here, a threshold for determining whether inference is performed on the edge device side or on the server device side is considered. As an example, it is conceivable to use the overall accuracy as a reference. It is desirable that the threshold be set such that the processing can be performed on the edge device side as long as the accuracy does not change so much even if the inference is performed on the edge device side or the server device side, and the processing can be performed on the server device side in a case where the accuracy decreases when the processing is performed on the edge device side. For example, in a case of Fig. 10, it can be seen that the threshold of the offload rate may be set to 0.4 in a case where the quantization bit rate is 8 (acc_int8). Then, the threshold of the entropy of the inference result on the edge side may be determined so that the offload rate becomes 0.4. In the case of Fig. 10, the threshold of the entropy may be about 0.5.

[Effects of Embodiment] As described above, in the embodiment, by arranging the feature extraction layer Bf2 in the DNN2' before being arranged in the server device 20 as the feature extraction layer Bf2 of the DNN1 of the edge device 30, the feature map output from the edge device 30 can also be shared with the server device 20. That is, the detection layer Bd2 of the DNN2 of the server device 20 can execute the inference processing using the feature map output from the feature extraction layer Bf2 of the DNN1 of the edge device 30.

Therefore, since execution of the feature extraction processing can be omitted when the inference is performed on the server device 20 side, calculation time of the entire system can be shortened, and delay can be reduced. In addition, since the output data from the edge device 30 to the server device 20 is not the image to be processed but the feature map extracted from the image, an amount of data transfer from the edge device 30 to the server device 20 can be reduced. In addition, since the edge device transmits, to the server device, a feature map that is neither an image to be processed or an encoded image nor a generally used feature amount such as a frequency signal, it is also possible to improve confidentiality of a third party. In a case of reliably securing the confidentiality, a constraint that makes a relationship between the feature map and the input data (target image) irreversible may be further applied when learning is performed.

In the embodiment, the DNN1 in which the feature extraction layer Bf2 in the DNN2' before being arranged in the server device 20 is arranged in the preceding stage of the detection layer Bd1 of the edge device 30 has been proposed. This DNN1 has actually performed a classification task, and can be evaluated to be effective as a lightweight model in both accuracy and speed.

Furthermore, in the present embodiment, the reliability used when determining which inference result of the edge device 30 and the server device 20 is adopted is formulated as entropy of the inference result of the DNN1, and the threshold is set, whereby an offload rate and overall accuracy can be adjusted according to a use case at the time of actual operation.

Note that the image has been described as an example of the processing target data in the present embodiment, but the processing target data is not limited to the image, and may be detection results detected by various sensors. Furthermore, in the present embodiment, a case where the YOLOv2 and the YOLOv3 are applied as the base models of the DNN1 and the DNN2 has been described as an example, but the base models of the DNN1 and the DNN2 may be appropriately set according to the task.

Furthermore, in the present embodiment, the plurality of edge devices 30 or the plurality of server devices 20 may be provided, and the plurality of the edge devices 30 and the plurality of server devices 20 may be provided.

[System Configuration and Others] All or any part of each processing function performed in each device can be realized by a CPU and a program analyzed and executed by the CPU, or can be realized as hardware by wired logic.

Further, among pieces of processing described in the present embodiment, all or some of pieces of processing described as being performed automatically can be performed manually, or all or some of pieces of processing described as being performed manually can be performed automatically by a known method.

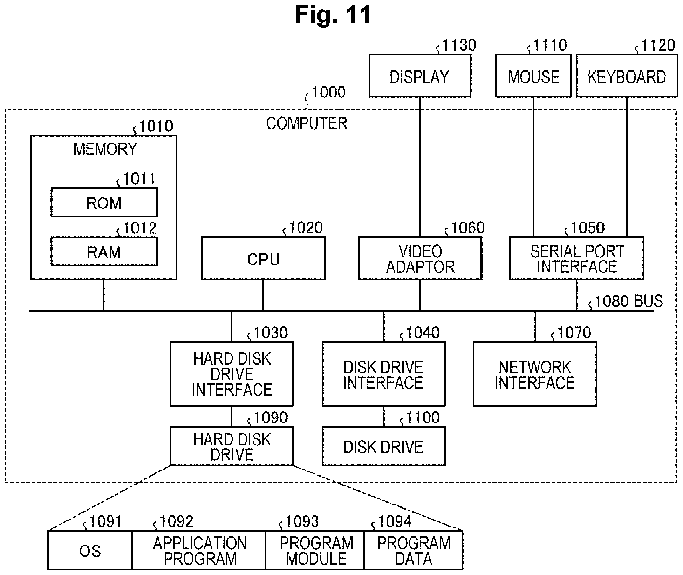

[Program] Fig. 11 is a diagram illustrating an example of a computer on which the edge device 30 and the server device 20 are implemented by executing a program. A computer 1000 includes, for example, a memory 1010 and a CPU 1020. In addition, the accelerators described above may be provided to assist computation. Further, the computer 1000 also includes a hard disk drive interface 1030, a disk drive interface 1040, a serial port interface 1050, a video adapter 1060, and a network interface 1070. These units are connected to each other by a bus 1080.

The memory 1010 includes a read only memory (ROM) 1011 and a RAM 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an operating system (OS) 1091, an application program 1092, a program module 1093, and program data 1094. That is, a program that defines each processing of the edge device 30 and the server device 20 is implemented as the program module 1093 in which a code executable by the computer is described. The program module 1093 is stored in, for example, the hard disk drive 1090. For example, the program module 1093 for executing processing similar to functional configurations of the edge device 30 and the server device 20 is stored in the hard disk drive 1090. Note that the hard disk drive 1090 may be replaced with a solid state drive (SSD).

Furthermore, setting data used in the processing of the above-described embodiment is stored, for example, in the memory 1010 or the hard disk drive 1090 as the program data 1094. Then, the CPU 1020 reads the program module 1093 and the program data 1094 stored in the memory 1010 or the hard disk drive 1090 to the RAM 1012, and executes them as necessary.

Note that the program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (local area network (LAN), wide area network (WAN), or the like). Then, the program module 1093 and the program data 1094 may be read by the CPU 1020 from the other computer via the network interface 1070.

Reference Signs List

| | |
|---|---|
| 20 | Server device |
| 21, 31 | Inference unit |
| 30 | Edge device |
| 32 | Determination unit |
| 33 | Quantization unit |
| 100 | Processing system |

**Claims**

1.  A processing system (100) including an edge device (30) and a server device (20), wherein
    the edge device (30) includes:

    a first inference unit (31) configured to extract a feature amount of processing target data by using a first neural network model and execute inference processing on the processing target data on a basis of the extracted feature amount; and
    a determination unit (32) configured to output an inference result by the first inference unit (31) in a case where reliability of the inference result by the first inference unit (31) exceeds a threshold, and output the feature amount of the processing target data to the server device (20) in a case where the reliability is equal to or less than the threshold, and
    the server device (20) includes:

    a second inference unit (21) configured to execute inference processing on the processing target data on the basis of the feature amount of the processing target data output from the edge device (30) by using a second neural network model having higher inference accuracy than the first neural network model, wherein
    the first neural network model includes
    a first extraction unit (Bf2) configured to extract the feature amount of the processing target data, and
    a first execution unit (Bd1) configured to execute first inference processing on the basis of the feature amount of the processing target data, and
    the second neural network model includes
    a second execution unit (Bd2) configured to execute second inference processing on the basis of the feature amount of the processing target data, and
    the second execution unit (Bd2) executes the second inference processing on the basis of the feature amount of the processing target data extracted by the first extraction unit (Bf2), and
    wherein the first neural network model is a neural network model configured by deleting a feature extraction layer from a neural network model before being arranged in the edge device, and arranging as the first extraction unit in a preceding stage of the first execution unit of the edge device, a feature extraction layer of a neural network model trained before being arranged in the server device, and

the second neural network model is a neural network model configured by deleting the feature extraction layer from a neural network model before being arranged in the server device.

2. The processing system (100) according to claim 1, wherein the determination unit (32) outputs the quantized feature amount of the processing target data to the server device (20).

3. The processing system (100) according to claim 1 or 2, wherein the reliability is based on entropy of the inference result by the first inference unit (31).

4. A processing method executed by a processing system (100) including an edge device (30) and a server device (20), the processing method comprising:

a first inference step in which the edge device (30) extracts a feature amount of processing target data by using a first neural network model and executes inference processing on the processing target data on a basis of the extracted feature amount;

a determination step in which the edge device (30) outputs an inference result in the first inference step in a case where reliability of the inference result in the first inference step exceeds a threshold, and outputs the feature amount of the processing target data to the server device (20) in a case where the reliability is equal to or less than the threshold; and

a second inference step in which the server device (20) executes inference processing on the processing target data on the basis of the feature amount of the processing target data output from the edge device (30) by using a second neural network model having higher inference accuracy than the first neural network model,

wherein

the first neural network model includes

a first extraction unit (Bf2) for extracting the feature amount of the processing target data, and

a first execution unit (Bd1) for executing first inference processing on the basis of the feature amount of the processing target data, and

the second neural network model includes

a second execution unit (Bd2) for executing second inference processing on the basis of the feature amount of the processing target data, and

the second execution unit (Bd2) executes the second inference processing on the basis of the feature amount of the processing target data extracted by the first extraction unit (Bf2), and

wherein the first neural network model is a neural network model configured by deleting a feature extraction layer from a neural network model before being arranged in the edge device, and arranging as the first extraction unit in a preceding stage of the first execution unit of the edge device, a feature extraction layer of a neural network model trained before being arranged in the server device, and

the second neural network model is a neural network model configured by deleting the feature extraction layer from a neural network model before being arranged in the server device.

5. A processing program comprising instructions which, when the processing program is executed by a computer, cause the computer to execute a method, wherein

a computer as an edge device (30) is caused to execute:

a first inference step of extracting a feature amount of processing target data by using a first neural network model and executing inference processing on the processing target data on a basis of the extracted feature amount; and

a determination step of outputting an inference result in the first inference step in a case where reliability of the inference result in the first inference step exceeds a threshold, and outputting the feature amount of the processing target data in a case where the reliability is equal to or less than the threshold, and

a computer as a server device (20) is caused to execute:

a second inference step of executing inference processing on the processing target data on the basis of the feature amount of the processing target data output from the edge device (30) by using a second neural network model having higher inference accuracy than the first neural network model,

wherein

the first neural network model includes

a first extraction unit (Bf2) for extracting the feature amount of the processing target data, and

a first execution unit (Bd1) for executing first inference processing on the basis of the feature amount of the processing target data, and
the second neural network model includes
a second execution unit (Bd2) for executing second inference processing on the basis of the feature amount of the processing target data, and
the second execution unit (Bd2) executes the second inference processing on the basis of the feature amount of the processing target data extracted by the first extraction unit (Bf2), and
wherein the first neural network model is a neural network model configured by deleting a feature extraction layer from a neural network model before being arranged in the edge device, and arranging as the first extraction unit in a preceding stage of the first execution unit of the edge device, a feature extraction layer of a neural network model trained before being arranged in the server device, and
the second neural network model is a neural network model configured by deleting the feature extraction layer from a neural network model before being arranged in the server device.

**Patentansprüche**

1. Verarbeitungssystem (100), das eine Edge-Vorrichtung (30) und eine Server-Vorrichtung (20) einschließt, wobei die Edge-Vorrichtung (30) einschließt:

   eine erste Interferenzeinheit (31), die konfiguriert ist, um eine Merkmalsmenge an Verarbeitungszieldaten durch Verwenden eines ersten neuronalen Netzwerkmodells zu extrahieren, und eine Interferenzverarbeitung an den Verarbeitungszieldaten auf einer Basis der extrahierten Merkmalsmenge durchzuführen; und
   eine Bestimmungseinheit (32), die konfiguriert ist, um ein Interferenzergebnis durch die erste Interferenzeinheit (31) in einem Fall auszugeben, in dem die Zuverlässigkeit des Interferenzergebnisses durch die erste Interferenzeinheit (31) einen Schwellenwert überschreitet, und die Merkmalsmenge der Verarbeitungszieldaten an die Server-Vorrichtung (20) in einem Fall auszugeben, in dem die Zuverlässigkeit gleich oder kleiner als der Schwellenwert ist, und
   die Server-Vorrichtung (20) einschließt:

   eine zweite Interferenzeinheit (21), die konfiguriert ist, um Interferenzverarbeitung an den Verarbeitungszieldaten auf der Basis der Merkmalsmenge der von der Edge-Vorrichtung (30) ausgegebenen Verarbeitungszieldaten durch Verwenden eines zweiten neuronalen Netzwerkmodells auszuführen, das eine höhere Interferenzgenauigkeit als das erste neuronale Netzwerkmodell aufweist, wobei
   das erste neuronale Netzwerkmodell einschließt
   eine erste Extraktionseinheit (Bf2), die konfiguriert ist, um die Merkmalsmenge der Verarbeitungszieldaten zu extrahieren, und
   eine erste Ausführungseinheit (Bd1), die konfiguriert ist, um die erste Interferenzverarbeitung auf der Basis der Merkmalsmenge der Verarbeitungszieldaten auszuführen, und
   das zweite neuronale Netzwerkmodell einschließt
   eine zweite Ausführungseinheit (Bd2), die konfiguriert ist, um eine zweite Interferenzverarbeitung auf der Basis der Merkmalsmenge der Verarbeitungszieldaten auszuführen, und
   die zweite Ausführungseinheit (Bd2) die zweite Interferenzverarbeitung auf der Basis der Merkmalsmenge der von der ersten Extraktionseinheit (Bf2) extrahierten Verarbeitungszieldaten ausführt, und
   wobei das erste neuronale Netzwerkmodell ein neuronales Netzwerkmodell ist, das durch Löschen einer Merkmalsextraktionsschicht aus einem neuronalen Netzwerkmodell konfiguriert ist, bevor es in der Edge-Vorrichtung angeordnet wird, und Anordnen als die erste Extraktionseinheit in einer vorangehenden Stufe der ersten Ausführungseinheit der Edge-Vorrichtung einer Merkmalsextraktionsschicht eines neuronalen Netzwerkmodells, das trainiert wurde, bevor es in der Server-Vorrichtung angeordnet wurde, und
   das zweite neuronale Netzwerkmodell ein neuronales Netzwerkmodell ist, das durch Löschen der Merkmalsextraktionsschicht aus einem neuronalen Netzwerkmodell konfiguriert ist, bevor es in der Server-Vorrichtung angeordnet wird.

2. Verarbeitungssystem (100) nach Anspruch 1, wobei die Bestimmungseinheit (32) die quantifizierte Merkmalsmenge der Verarbeitungszieldaten an die Server-Vorrichtung (20) ausgibt.

3. Verarbeitungssystem (100) nach Anspruch 1 oder 2, wobei die Zuverlässigkeit auf Entropie des Inferenzergebnisses durch die erste Interferenzeinheit (31) basiert.

4. Verarbeitungsverfahren, das von einem Verarbeitungssystem (100) ausgeführt wird, das eine Edge-Vorrichtung (30) und eine Server-Vorrichtung (20) einschließt, wobei das Verarbeitungsverfahren umfasst:

einen ersten Interferenzschritt, bei dem die Edge-Vorrichtung (30) eine Merkmalsmenge von Verarbeitungszieldaten durch Verwenden eines ersten neuronalen Netzwerkmodells extrahiert und Interferenzverarbeitung an den Verarbeitungszieldaten auf einer Basis der extrahierten Merkmalsmenge durchführt;
einen Bestimmungsschritt, bei dem die Edge-Vorrichtung (30) ein Interferenzergebnis in dem ersten Interferenzschritt in einem Fall ausgibt, in dem die Zuverlässigkeit des Interferenzergebnisses in dem ersten Interferenzschritt einen Schwellenwert überschreitet, und die Merkmalsmenge der Verarbeitungszieldaten in einem Fall an die Server-Vorrichtung (20) ausgibt, in dem die Zuverlässigkeit gleich oder kleiner als der Schwellenwert ist; und
einen zweiten Interferenzschritt, bei dem die Server-Vorrichtung (20) Interferenzverarbeitung an den Verarbeitungszieldaten auf der Basis der Merkmalsmenge der von der Edge-Vorrichtung (30) ausgegebenen Verarbeitungszieldaten durch Verwenden eines zweiten neuronalen Netzwerkmodells ausführt, das eine höhere Interferenzgenauigkeit als das erste neuronale Netzwerkmodell aufweist,
wobei
das erste neuronale Netzwerkmodell einschließt
eine erste Extraktionseinheit (Bf2) zum Extrahieren der Merkmalsmenge der Verarbeitungszieldaten, und
eine erste Ausführungseinheit (Bd1) zum Ausführen einer ersten Interferenzverarbeitung auf der Basis der Merkmalsmenge der Verarbeitungszieldaten, und
das zweite neuronale Netzwerkmodell einschließt
eine zweite Ausführungseinheit (Bd2) zum Ausführen einer zweiten Interferenzverarbeitung auf der Basis der Merkmalsmenge der Verarbeitungszieldaten, und
die zweite Ausführungseinheit (Bd2) die zweite Interferenzverarbeitung auf der Basis der Merkmalsmenge der von der ersten Extraktionseinheit (Bf2) extrahierten Verarbeitungszieldaten ausführt, und
wobei das erste neuronale Netzwerkmodell ein neuronales Netzwerkmodell ist, das durch Löschen einer Merkmalsextraktionsschicht aus einem neuronalen Netzwerkmodell konfiguriert ist, bevor es in der Edge-Vorrichtung angeordnet wird, und Anordnen als die erste Extraktionseinheit in einer vorangehenden Stufe der ersten Ausführungseinheit der Edge-Vorrichtung einer Merkmalsextraktionsschicht eines neuronalen Netzwerkmodells, das trainiert wurde, bevor es in der Server-Vorrichtung angeordnet wurde, und
das zweite neuronale Netzwerkmodell ein neuronales Netzwerkmodell ist, das durch Löschen der Merkmalsextraktionsschicht aus einem neuronalen Netzwerkmodell konfiguriert ist, bevor es in der Server-Vorrichtung angeordnet wird.

5. Verarbeitungsprogramm, das Anweisungen umfasst, die, wenn das Verarbeitungsprogramm von einem Computer ausgeführt wird, den Computer veranlassen, ein Verfahren auszuführen, wobei
ein Computer als eine Edge-Vorrichtung (30) veranlasst wird, auszuführen:

einen ersten Interferenzschritt zum Extrahieren einer Merkmalsmenge von Verarbeitungszieldaten durch Verwenden eines ersten neuronalen Netzwerkmodells und Ausführen einer Interferenzverarbeitung an den Verarbeitungszieldaten auf der Basis der extrahierten Merkmalsmenge; und
einen Bestimmungsschritt zum Ausgeben eines Interferenzergebnisses in dem ersten Interferenzschritt in einem Fall, in dem die Zuverlässigkeit des Interferenzergebnisses in dem ersten Interferenzschritt einen Schwellenwert überschreitet, und Ausgeben der Merkmalsmenge der Verarbeitungszieldaten in einem Fall, in dem die Zuverlässigkeit gleich oder kleiner als der Schwellenwert ist, und
ein Computer als Server-Vorrichtung (20) veranlasst wird, auszuführen:

einen zweiten Interferenzschritt, zum Ausführen einer Interferenzverarbeitung an den Verarbeitungszieldaten auf der Basis der Merkmalsmenge der von der Edge-Vorrichtung (30) ausgegebenen Verarbeitungszieldaten durch Verwenden eines zweiten neuronalen Netzwerkmodells, das eine höhere Interferenzgenauigkeit als das erste neuronale Netzwerkmodell aufweist,
wobei
das erste neuronale Netzwerkmodell einschließt
eine erste Extraktionseinheit (Bf2) zum Extrahieren der Merkmalsmenge der Verarbeitungszieldaten, und
eine erste Ausführungseinheit (Bd1) zum Ausführen einer ersten Interferenzverarbeitung auf der Basis der Merkmalsmenge der Verarbeitungszieldaten, und
das zweite neuronale Netzwerkmodell einschließt
eine zweite Ausführungseinheit (Bd2) zum Ausführen einer zweiten Interferenzverarbeitung auf der Basis der Merkmalsmenge der Verarbeitungszieldaten, und

die zweite Ausführungseinheit (Bd2) die zweite Interferenzverarbeitung auf der Basis der Merkmalsmenge der von der ersten Extraktionseinheit (Bf2) extrahierten Verarbeitungszieldaten ausführt, und

wobei das erste neuronale Netzwerkmodell ein neuronales Netzwerkmodell ist, das durch Löschen einer Merkmalsextraktionsschicht aus einem neuronalen Netzwerkmodell konfiguriert ist, bevor es in der Edge-Vorrichtung angeordnet wird, und Anordnen als die erste Extraktionseinheit in einer vorangehenden Stufe der ersten Ausführungseinheit der Edge-Vorrichtung einer Merkmalsextraktionsschicht eines neuronalen Netzwerkmodells, das trainiert wurde, bevor es in der Server-Vorrichtung angeordnet wurde, und

das zweite neuronale Netzwerkmodell ein neuronales Netzwerkmodell ist, das durch Löschen der Merkmalsextraktionsschicht aus einem neuronalen Netzwerkmodell konfiguriert ist, bevor es in der Server-Vorrichtung angeordnet wird.

## Revendications

1. Système (100) de traitement incluant un dispositif (30) périphérique et un dispositif (20) serveur, dans lequel le dispositif (30) périphérique inclut :

une première unité (31) d'inférence configurée pour extraire une quantité caractéristique de données cibles de traitement en utilisant un premier modèle de réseau de neurones et exécuter un traitement d'inférence sur les données cibles de traitement sur une base de la quantité caractéristique extraite ; et
une unité (32) de détermination configurée pour délivrer en sortie un résultat d'inférence par la première unité (31) d'inférence dans un cas où la fiabilité du résultat d'inférence par la première unité (31) d'inférence dépasse un seuil, et délivrer en sortie la quantité caractéristique des données cibles de traitement vers le dispositif (20) serveur dans un cas où la fiabilité est égale ou inférieure au seuil, et
le dispositif (20) serveur inclut :

une seconde unité (21) d'inférence configurée pour exécuter un traitement d'inférence sur les données cibles de traitement sur la base de la quantité caractéristique des données cibles de traitement délivrées en sortie du dispositif (30) périphérique en utilisant un second modèle de réseau de neurones ayant une précision d'inférence plus élevée que le premier modèle de réseau de neurones, dans lequel
le premier modèle de réseau de neurones inclut
une première unité (Bf2) d'extraction configurée pour extraire la quantité caractéristique des données cibles de traitement, et
une première unité (Bd1) d'exécution configurée pour exécuter un premier traitement d'inférence sur la base de la quantité caractéristique des données cibles de traitement, et
le second modèle de réseau de neurones inclut
une seconde unité (Bd2) d'exécution configurée pour exécuter un second traitement d'inférence sur la base de la quantité caractéristique des données cibles de traitement, et
la seconde unité (Bd2) d'exécution exécute le second traitement d'inférence sur la base de la quantité caractéristique des données cibles de traitement extraites par la première unité (Bf2) d'extraction, et
dans lequel le premier modèle de réseau de neurones est un modèle de réseau de neurones configuré par la suppression d'une couche d'extraction de caractéristiques d'un modèle de réseau de neurones avant qu'il soit agencé dans le dispositif périphérique, et l'agencement, en tant que première unité d'extraction dans un stade précédent de la première unité d'exécution du dispositif périphérique, d'une couche d'extraction de caractéristiques d'un modèle de réseau de neurones entraîné avant qu'il soit agencé dans le dispositif serveur, et
le second modèle de réseau de neurones est un modèle de réseau de neurones configuré par la suppression de la couche d'extraction de caractéristiques d'un modèle de réseau de neurones avant qu'il soit agencé dans le dispositif serveur.

2. Système (100) de traitement selon la revendication 1, dans lequel l'unité (32) de détermination délivre en sortie la quantité caractéristique quantifiée des données cibles de traitement vers le dispositif (20) serveur.

3. Système (100) de traitement selon la revendication 1 ou la revendication 2, dans lequel la fiabilité est basée sur l'entropie du résultat d'inférence par la première unité (31) d'inférence.

4. Procédé de traitement exécuté par un système (100) de traitement incluant un dispositif (30) périphérique et un dispositif (20) serveur,

le procédé de traitement comprenant :

une première étape d'inférence dans laquelle le dispositif (30) périphérique extrait une quantité caractéristique de données cibles de traitement en utilisant un premier modèle de réseau de neurones et exécute un traitement d'inférence sur les données cibles de traitement sur une base de la quantité caractéristique extraite ;

une étape de détermination dans laquelle le dispositif (30) périphérique délivre en sortie un résultat d'inférence à la première étape d'inférence dans un cas où la fiabilité du résultat d'inférence à la première étape d'inférence dépasse un seuil, et délivre en sortie la quantité caractéristique des données cibles de traitement vers le dispositif (20) serveur dans un cas où la fiabilité est égale ou inférieure au seuil ; et

une seconde étape d'inférence dans laquelle le dispositif (20) serveur exécute un traitement d'inférence sur les données cibles de traitement sur la base de la quantité caractéristique des données cibles de traitement délivrées en sortie du dispositif (30) périphérique en utilisant un second modèle de réseau de neurones présentant une précision d'inférence plus élevée que le premier modèle de réseau de neurones,

dans lequel

le premier modèle de réseau de neurones inclut

une première unité (Bf2) d'extraction pour l'extraction de la quantité caractéristique des données cibles de traitement, et

une première unité (Bd1) d'exécution pour l'exécution d'un premier traitement d'inférence sur la base de la quantité caractéristique des données cibles de traitement, et

le second modèle de réseau de neurones inclut

une seconde unité (Bd2) d'exécution pour l'exécution d'un second traitement d'inférence sur la base de la quantité caractéristique des données cibles de traitement, et

la seconde unité (Bd2) d'exécution exécute le second traitement d'inférence sur la base de la quantité caractéristique des données cibles de traitement extraites par la première unité (Bf2) d'extraction, et

dans lequel le premier modèle de réseau de neurones est un modèle de réseau de neurones configuré par la suppression d'une couche d'extraction de caractéristiques d'un modèle de réseau de neurones avant qu'il soit agencé dans le dispositif périphérique, et l'agencement, en tant que première unité d'extraction dans un stade précédent de la première unité d'exécution du dispositif périphérique, d'une couche d'extraction de caractéristiques d'un modèle de réseau de neurones entraîné avant qu'il soit agencé dans le dispositif serveur, et

le second modèle de réseau de neurones est un modèle de réseau de neurones configuré par la suppression de la couche d'extraction de caractéristiques d'un modèle de réseau de neurones avant qu'il soit agencé dans le dispositif serveur.

5. Programme de traitement comprenant des instructions qui, lorsque le programme de traitement est exécuté par un ordinateur, amènent l'ordinateur à exécuter un procédé, dans lequel

un ordinateur en tant que dispositif (30) périphérique est amené à exécuter :

une première étape d'inférence consistant à extraire une quantité caractéristique de données cibles de traitement en utilisant un premier modèle de réseau de neurones et exécuter un traitement d'inférence sur les données cibles de traitement sur une base de la quantité caractéristique extraite ; et

une étape de détermination consistant à délivrer en sortie un résultat d'inférence à la première étape d'inférence dans un cas où la fiabilité du résultat d'inférence à la première étape d'inférence dépasse un seuil, et délivrer en sortie la quantité caractéristique des données cibles de traitement dans un cas où la fiabilité est égale ou inférieure au seuil, et

un ordinateur en tant que dispositif (20) serveur est amené à exécuter :

une seconde étape d'inférence consistant à exécuter un traitement d'inférence sur les données cibles de traitement sur la base de la quantité caractéristique des données cibles de traitement délivrées en sortie du dispositif (30) périphérique en utilisant un second modèle de réseau de neurones présentant une précision d'inférence plus élevée que le premier modèle de réseau de neurones,

dans lequel

le premier modèle de réseau de neurones inclut

une première unité (Bf2) d'extraction pour l'extraction de la quantité caractéristique des données cibles de traitement, et

une première unité (Bd1) d'exécution pour l'exécution d'un premier traitement d'inférence sur la base de la quantité caractéristique des données cibles de traitement, et

le second modèle de réseau de neurones inclut

une seconde unité (Bd2) d'exécution pour l'exécution d'un second traitement d'inférence sur la base de la quantité caractéristique des données cibles de traitement, et

la seconde unité (Bd2) d'exécution exécute le second traitement d'inférence sur la base de la quantité caractéristique des données cibles de traitement extraites par la première unité (Bf2) d'extraction, et

dans lequel le premier modèle de réseau de neurones est un modèle de réseau de neurones configuré par la suppression d'une couche d'extraction de caractéristiques d'un modèle de réseau de neurones avant qu'il soit agencé dans le dispositif périphérique, et l'agencement, en tant que première unité d'extraction dans un stade précédent de la première unité d'exécution du dispositif périphérique, d'une couche d'extraction de caractéristiques d'un modèle de réseau de neurones entraîné avant qu'il soit agencé dans le dispositif serveur, et

le second modèle de réseau de neurones est un modèle de réseau de neurones configuré par la suppression de la couche d'extraction de caractéristiques d'un modèle de réseau de neurones avant qu'il soit agencé dans le dispositif serveur.

**Fig. 1**

FEATURE MAP

# Fig. 2-1

## Fig. 2-2

# Fig. 3

## Fig. 4

| Method | Input | mAP(%) | FPS |
|---|---|---|---|
| Faster R-CNN[9](VGG16) | – | 72.70 | 11.23 |
| YOLO[11] | 448 × 448 | 62.52 | 42.34 |
| YOLOv2[24] | 416 × 416 | 73.82 | 64.65 |
| YOLOv2 544 × 544[24] | 544 × 544 | 75.96 | 39.14 |
| SSD300[12] | 300 × 300 | 74.18 | 58.78 |
| SSD512[12] | 512 × 512 | 76.83 | 27.75 |
| DSSD(ResNet−101)[25] | 321 × 321 | 76.03 | 8.36 |
| R−SSD300[13] | 300 × 300 | 75.02 | 43.78 |
| R−SSD512[13] | 512 × 512 | 77.73 | 24.19 |
| RefineDet320[26] | 320 × 320 | 76.97 | 46.83 |
| RefineDet512[26] | 512 × 512 | 77.68 | 29.45 |
| SIN[27] | – | 77.26 | 10.79 |
| YOLOv3[29] | 416 × 416 | 88.09 | 51.26 |

RELATIVELY LIGHTWEIGHT & HIGH-SPEED

RELATIVELY HIGH-ACCURACY

BASE MODEL OF EDGE DEVICE
YOLOv2

BASE MODEL OF SERVER DEVICE
YOLOv3

# Fig. 5

| | Type | Filters | Size | Output |
|---|---|---|---|---|
| | Convolutional | 32 | 3×3 | 256×256 |
| | Convolutional | 64 | 3×3/2 | 128×128 |
| 1× | Convolutional | 32 | 1×1 | |
| | Convolutional | 64 | 3×3 | |
| | Residual | | | 128×128 |
| | Convolutional | 128 | 3×3/2 | 64×64 |
| 2× | Convolutional | 64 | 1×1 | |
| | Convolutional | 128 | 3×3 | |
| | Residual | | | 64×64 |
| | Convolutional | 256 | 3×3/2 | 32×32 |
| 8× | Convolutional | 128 | 1×1 | |
| | Convolutional | 256 | 3×3 | |
| | Residual | | | 32×32 |
| | Convolutional | 512 | 3×3/2 | 16×16 |
| 8× | Convolutional | 256 | 1×1 | |
| | Convolutional | 512 | 3×3 | |
| | Residual | | | 16×16 |
| | Convolutional | 1024 | 3×3/2 | 8×8 |
| 4× | Convolutional | 512 | 1×1 | |
| | Convolutional | 1024 | 3×3 | |
| | Residual | | | 8×8 |
| | Avgpool | | Global | |
| | Connected | | 1000 | |
| | Softmax | | | |

x

weight layer

$F(x)$ relu

weight layer

identity x

$H(x)=F(x)+x$ (+)

relu

Bf-1(Residual block)

Bd2-1

scale3

scale2

scale1

Convs  Convs  Convs

YOLO detection layer

# Fig. 6-1

EDGE DEVICE: re-constructed yolov2 — Y11 — SERVER DEVICE: yolov3

**EDGE DEVICE: re-constructed yolov2**

| | Type | Filters | Size |
|---|---|---|---|
| | Convolutional | 32 | 3 × 3 |
| | Convolutional | 64 | 3 × 3/2 |
| | Convolutional | 32 | 1 × 1 |
| 1 × | Convolutional | 64 | 3 × 3 |
| | Residual | | |
| | Convolutional | 128 | 3 × 3/2 |
| | Convolutional | 64 | 1 × 1 |
| 2 × | Convolutional | 128 | 3 × 3 |
| | Residual | | |
| | Maxpool | | 2 × 2/2 |
| | Convolutional | 256 | 3 × 3 |
| | Convolutional | 128 | 1 × 1 |
| | Convolutional | 256 | 3 × 3 |
| | Maxpool | | 2 × 2/2 |
| | Convolutional | 512 | 3 × 3 |
| | Convolutional | 256 | 1 × 1 |
| | Convolutional | 512 | 3 × 3 |
| | Convolutional | 256 | 1 × 1 |
| | Convolutional | 512 | 3 × 3 |
| | Maxpool | | 2 × 2/2 |
| | Convolutional | 1024 | 3 × 3 |
| | Convolutional | 512 | 1 × 1 |
| | Convolutional | 1024 | 3 × 3 |
| | Convolutional | 512 | 1 × 1 |
| | Convolutional | 1024 | 3 × 3 |
| | Convolutional | 1000 | 1 × 1 |
| | Avgpool | | Global |
| | Softmax | | |

Bf2-1, Bd1-1

**SERVER DEVICE: yolov3**

| | Type | Filters | Size |
|---|---|---|---|
| | Convolutional | 32 | 3 × 3 |
| | Convolutional | 64 | 3 × 3/2 |
| | Convolutional | 32 | 1 × 1 |
| 1 × | Convolutional | 64 | 3 × 3 |
| | Residual | | |
| | Convolutional | 128 | 3 × 3/2 |
| | Convolutional | 64 | 1 × 1 |
| 2 × | Convolutional | 128 | 3 × 3 |
| | Residual | | |
| | Convolutional | 256 | 3 × 3/2 |
| | Convolutional | 128 | 1 × 1 |
| 8 × | Convolutional | 256 | 3 × 3 |
| | Residual | | |
| | Convolutional | 512 | 3 × 3/2 |
| | Convolutional | 256 | 1 × 1 |
| 8 × | Convolutional | 512 | 3 × 3 |
| | Residual | | |
| | Convolutional | 1024 | 3 × 3/2 |
| | Convolutional | 512 | 1 × 1 |
| 4 × | Convolutional | 1024 | 3 × 3 |
| | Residual | | |
| | Avgpool | | Global |
| | Connected | | 1000 |
| | Softmax | | |

Bf2-1

# Fig. 6-2

EDGE DEVICE: re-constructed yolov2

| Type | Filters | Size |
|---|---|---|
| Convolutional | 32 | 3 × 3 |
| Convolutional | 64 | 3 × 3/2 |
| 1× Convolutional | 32 | 1 × 1 |
| Convolutional | 64 | 3 × 3 |
| Residual | | |
| Convolutional | 128 | 3 × 3/2 |
| 2× Convolutional | 64 | 1 × 1 |
| Convolutional | 128 | 3 × 3 |
| Residual | | |
| Maxpool | | 2 × 2/2 |
| Convolutional | 256 | 3 × 3 |
| Convolutional | 128 | 1 × 1 |
| Convolutional | 256 | 3 × 3 |
| Maxpool | | 2 × 2/2 |
| Convolutional | 512 | 3 × 3 |
| Convolutional | 256 | 1 × 1 |
| Convolutional | 512 | 3 × 3 |
| Convolutional | 256 | 1 × 1 |
| Convolutional | 512 | 3 × 3 |
| Maxpool | | 2 × 2/2 |
| Convolutional | 1024 | 3 × 3 |
| Convolutional | 512 | 1 × 1 |
| Convolutional | 1024 | 3 × 3 |
| Convolutional | 512 | 1 × 1 |
| Convolutional | 1024 | 3 × 3 |
| Convolutional | 1000 | 1 × 1 |
| Avgpool | | Global |
| Softmax | | |

Bf2-1

Bd1-1

SHARED FEATURE MAP (QUANTIZATION)

Y12

Result1 — Y11

SERVER DEVICE: re-constructed yolov3

| Type | Filters | Size |
|---|---|---|
| Convolutional | 256 | 3 × 3/2 |
| 8× Convolutional | 128 | 1 × 1 |
| Convolutional | 256 | 3 × 3 |
| Residual | | |
| Convolutional | 512 | 3 × 3/2 |
| 8× Convolutional | 256 | 1 × 1 |
| Convolutional | 512 | 3 × 3 |
| Residual | | |
| Convolutional | 1024 | 3 × 3/2 |
| 4× Convolutional | 512 | 1 × 1 |
| Convolutional | 1024 | 3 × 3 |
| Residual | | |
| Avgpool | | Global |
| Connected | | 1000 |
| Softmax | | |

Bd2-1 (CALCULATION RANGE IN SERVER)

Result2 — Y13

## Fig. 7

EDGE DEVICE 30            SERVER DEVICE 20

| INFERENCE UNIT | ～31 | DETERMINATION UNIT | ～32 | QUANTIZATION | ～33 | INFERENCE UNIT | ～21 |

INPUT IMAGE   S1

S2
EXTRACT FEATURE

S3    FEATURE MAP

S4
DETECT

S5    INFERENCE RESULT

S6
CALCULATE RELIABILITY

S9
FEATURE MAP

S7   IS RELIABILITY EQUAL TO OR LESS THAN THRESHOLD?   Yes   No

S10
QUANTIZATION

S8
OUTPUT INFERENCE RESULT OF DNN1

FEATURE MAP (QUANTIZATION)
S11

S12
DETECT

INFERENCE RESULT   S13

OUTPUT INFERENCE RESULT OF DNN2   S14

# Fig. 8

CLASSIFICATION PERFORMANCE COMPARATION

|  | Rank-1(%) | Rank-5(%) | Processing Time(s/frame) |
|---|---|---|---|
| EDGE DEVICE | 68.5 | 81.8 | 0.013 |
| Darknet19(YOLO v2) | 64.3 | 76.4 | 0.006 |
| Darknet53(YOLO v3) (SERVER DEVICE) | 81.2 | 98.2 | 0.023 |

# Fig. 9

# Fig. 10

# Fig. 11

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045369 A

**Non-patent literature cited in the description**

- **SHOHEI ENOMOTO et al.** Acceleration of Deep Learning Inference by Model Cascading. *IEICE TECHNICAL REPORT, IEICE, JP*, 29 February 2020, vol. 119 (481), 203-208

- **OKOSHI et al.** Proposal and Evaluation of DNN Model Operation Method with Cloud/Edge Collaboration. *Proceedings of the 80th National Convention*, 13 March 2018, vol. 2018 (1), 3-4